# EUROPEAN PATENT APPLICATION

(11) **EP 4 498 116 A1**
(43) Date of publication of application: **29.01.2025**
(21) Application number: 23188105.3
(22) Date of filing: 27.07.2023
(51) Int. Cl.: G01S 7/41, G01S 13/58, G01S 13/42, G01S 13/04

(54) **APPARATUS, METHOD, RADAR SYSTEM AND ELECTRONIC DEVICE**

(71) Applicant: Infineon Technologies AG, 85579 Neubiberg (DE)
(72) Inventor: OTT, Julius, 82069 Hohenschäftlarn (DE); SERVADEI, Lorenzo, 81539 München (DE)
(74) Representative: 2SPL Patentanwälte PartG mbB

(57) **Abstract**

An apparatus is proposed, comprising processing circuitry configured to obtain radar data indicating a received radar signal of a radar sensor, obtain data indicating a detection zone in which persons are to be detected, modify the radar data for masking an undesired zone outside the detection zone, and determine, using a trained neural network, a number of persons within the detection zone based on the modified radar data.

## Description

### Field

The present disclosure relates to radar-based detection of persons. Examples relate to an apparatus, a method, a radar system and an electronic device.

### Background

Conventional radar-based approaches to detect persons suffer from fixed detection parameters. These limitations may result in inaccurate detection, missed events, or false alarms. Therefore, there is a need for improved radar sensing.

### Summary

This demand is satisfied by the subject matter of the independent claims.

Some aspects of the present disclosure relate to an apparatus, comprising processing circuitry configured to obtain radar data indicating a received radar signal of a radar sensor, obtain data indicating a detection zone in which persons are to be detected, modify the radar data for masking an undesired zone outside the detection zone, and determine, using a trained neural network, a number of persons within the detection zone based on the modified radar data.

Some aspects of the present disclosure relate to a radar system, comprising an apparatus as described herein, and the radar sensor, wherein the radar sensor is configured to generate the radar data based on the received radar signal.

Some aspects of the present disclosure relate to an electronic device, comprising a radar system as described herein, and control circuitry configured to control the electronic device based on the determined number of persons.

Some aspects of the present disclosure relate to a method, comprising obtaining radar data indicating a received radar signal of a radar sensor, obtaining data indicating a detection zone in which persons are to be detected, modifying the radar data for masking an undesired zone outside the detection zone, and determining, using a trained neural network, a number of persons within the detection zone based on the modified radar data.

### Brief description of the Figures

Some examples of apparatuses and/or methods will be described in the following by way of example only, and with reference to the accompanying figures, in which
Fig. 1 illustrates an example of an apparatus;
Fig. 2 illustrates an example of a method for preprocessing radar data;
Fig. 3a and Fig. 3b illustrate examples of a range-Doppler and a range-angle representation of radar data;
Figs. 4a to 4c illustrate examples of micro motion data;
Fig. 5 illustrates an example of a radar system;
Fig. 6 illustrates an example of an electronic device;
Fig. 7 illustrates an example of a method; and
Fig. 8 illustrates an example of a detection zone within a field of view of a radar sensor.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

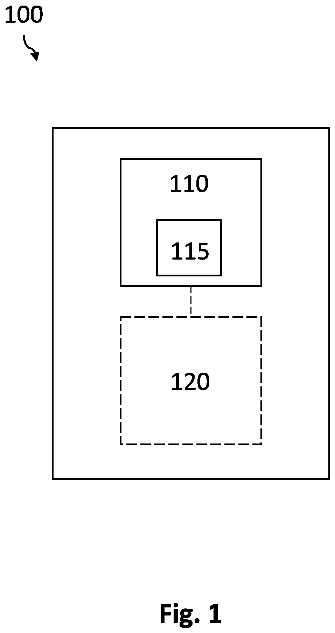

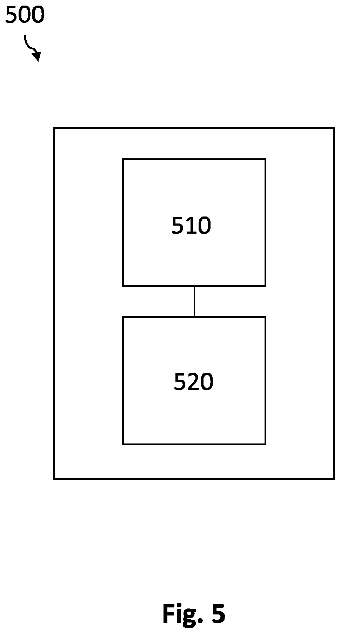

**Fig. 1** illustrates an example of an apparatus 100. The apparatus 100 is to be considered in the context of a radar sensor. For instance, the apparatus 100 may be integrated into a radar system comprising the radar sensor such as explained below with reference to Fig. 5 or may be external to the radar system. In the former case, the apparatus 100 may be external to or (e.g., partially or fully) integrated into the radar sensor.

The apparatus 100 comprises processing circuitry 110 and, optionally, interface circuitry 120. In case interface circuitry 120 is present, the interface circuitry 120 may be communicatively coupled (e.g., via a wired or wireless connection) to the processing circuitry 110, e.g., for data exchange between the interface circuitry 120 and the processing circuitry 110.

The processing circuitry 110 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 110 may optionally be coupled to, e.g., read only memory (ROM) for storing software, random access memory (RAM) and/or non-volatile memory.

The interface circuitry 120 may be any device or means for communicating or exchanging data. For instance, the interface circuitry 120 may be a set of electronic components, circuits, and/or subsystems for interaction between different interfacing entities such as devices, systems, or components. It may comprise voltage level shifters, buffers, amplifiers, filters, converters, multiplexers, demultiplexers, and/or various other electronic elements. These components may be configured to adapt signals for communication, convert data formats, match impedance, ensure signal integrity or alike.

The processing circuitry 110 is configured to obtain radar data indicating a received radar signal of a radar sensor and obtain data indicating a detection zone in which persons are to be detected.

The received radar signal refers to a reflection of a radio frequency signal detected by the radar sensor, i.e., after the radio frequency signal has bounced off or been scattered by objects in the surrounding environment. For example, the radar sensor may be configured to emit the radio frequency signal into a field of view of the radar sensor and generate the radar data based on the received reflection. For instance, the radar data may indicate or be samples of an intermediate frequency (IF) signal or baseband signal generated by the radar sensor. The IF signal may, e.g., be created by mixing the reflection with a local oscillator signal at a specific frequency. The baseband signal may be generated by downconverting or demodulating the received reflection into a baseband frequency. The radar sensor (or the processing circuitry 110) may determine the radar data by, e.g., sampling the received radar signal (e.g., the IF signal) and perform further processing of the radar data. The radar sensor (or the processing circuitry 110) may optionally modify the sampled signal in a pre-processing step, e.g., for noise-reduction, DC-removal (direct current) or alike. In some examples, the apparatus 100 may comprise memory configured to store the radar data.

The detection zone refers to a defined region in space to which the detection of persons shall be limited. For instance, the detection zone may be a region (e.g., volume or area) of interest in which persons are to be detected within a field of view of the radar sensor. A detection of persons in a region of uninterest, i.e., outside of the detection zone, may be intended to be suppressed or discarded, leading to a digital focusing on the detection zone. By defining this specific detection zone, the apparatus 100 may be able to concentrate efforts and resources on the detection zone, optimizing target detection, tracking, and data collection. This may allow for efficient utilization of its resources and enhance situational awareness in the designated region.

The data may, for instance, indicate an extent, a location, a size and/or a shape of the detection zone. For example, the detection zone may be smaller than a field of view of the radar sensor, i.e., the implementation of a detection zone may narrow down a region in which persons are to be detected. In some examples, the data may indicate at least one of a range interval and an angle interval in which persons are to be detected. The range interval may specify a distance range within which the apparatus 100 is intended to search for targets. It may be defined by a minimum and maximum distance. The angle interval may define an angular field of view within which the apparatus 100 is intended to search for targets. It may be defined by a minimum and maximum angle. The angle may be measured with respect to a reference axis of the radar sensor, which can be the boresight direction or another reference direction. The angle may refer to an azimuth, an elevation, a doppler angle or a combination thereof.

In some examples, the processing circuitry 110 is configured to obtain the data through receiving a user input of a user of the apparatus 100. For instance, the apparatus 100 may be communicatively coupled to a user interface which is configured to generate a signal indicative of the user input based on an interaction of the user with the user interface. This user interface may be, e.g., a command-line interface, a graphical user interface, a voice user interface, a gesture-based interface or alike. The user input may enable user-specific and adjustable detection zones. It may allow users to tailor the detection zone to a specific environment or preference.

Optionally or alternatively, the processing circuitry 110 may automatically determine the detection zone, e.g., based on an environment of the apparatus 100. For instance, the processing circuitry 110 may obtain environment data indicative of a type of environment (e.g., crowded or calm environment, public space or home environment) and may adjust the detection zone accordingly, e.g., based on a predefined logic. For example, the processing circuitry 110 may narrow down the detection zone in case of a crowded environment compared to a calm environment. This may prevent undesired constant detection of persons in the detection zone in case of a crowded place. The detection of the type of environment may be based on sensor data or computer vision, for instance.

If the apparatus 100 comprises the interface circuitry 120, the interface circuitry 120 may be configured to receive the radar data and/or the data. In case of receiving the radar data, the interface circuitry 120 may be communicatively coupled to the radar sensor or to a storage device storing the radar data. In case of receiving the data, the interface circuitry 120 may be communicatively coupled to the user interface generating the data in response to an interaction with a user, to a device automatically determining the detection zone and/or to a storage device storing the radar data.

Depending on the specific implementation, the apparatus 100 may dispense with the interface circuitry 120: For example, the processing circuitry 110 may determine said radar data, e.g., in case the processing circuitry 110 is integrated into the radar sensor. Optionally or alternatively, the processing circuitry 110 may determine said data, e.g., in case the processing circuitry 110 is integrated into a device comprising the user interface or it determines the detection zone itself.

Alternatively, the processing circuitry 110 may partially determine the data and/or the radar data. For instance, the processing circuitry 110 may determine a first part of the radar data, whereas at least one external processing circuitry may determine at least one second part of the radar data. The processing circuitry 110 and the external processing circuitry may, e.g., be connected within a distributed computing environment for jointly determining the radar data.

In this case, the processing circuitry 110 may either be integrated into the radar sensor or may be external to the radar sensor. The processing circuitry 110 may receive the second part of the radar data, e.g., via an interface to the external processing circuitry such as interface circuitry 120, and further process the first and the second part of the radar data, as described below.

In another alternative, the processing circuitry 110 is partially integrated into the radar sensor and is partially external to the radar sensor. In such cases, the interface circuitry 120 is optional. The processing circuitry 110 may, for instance, comprise a first part (first processing circuitry) which is integrated into the radar sensor and a second part (second processing circuitry) which is external to the radar sensor. In this case, the determination of the radar data and/or further processing, as described below, may be performed by the first and second part of the processing circuitry 110 in a distributed manner.

The processing circuitry 110 is configured to modify the radar data for masking an undesired zone (e.g., a range interval and/or an angle interval) outside the detection zone. For example, an undesired angle and/or an undesired range may be masked using digital processing techniques. For instance, by setting angular thresholds or gates, the part of the radar data falling outside the detection zone may be suppressed or discarded, masking the undesired angles. In case of masking ranges, range gating or thresholding may be applied, involving setting a specific range gate or threshold value. The part of the radar data corresponding to radar returns falling outside this range gate or below the threshold are considered undesired signals and may be attenuated or discarded. Ranges and/or angles may optionally or alternatively be excluded by filtering techniques, e.g., applied in a range or an angle domain of the radar data. Digital filters, such as low-pass filters or range gates, may be designed to pass part of the radar data within the desired range while attenuating or removing other parts of the radar data outside that range.

Generally speaking, the processing circuitry 110 may be configured to modify the radar data through at least one of attenuating, removing and zeroing a part of the radar data corresponding to the undesired zone. For instance, the processing circuitry 110 may determine which parts of the radar data correspond to radar returns from the undesired zone, e.g., through range and/or angle processing, and reject (mask) the determined parts. In case of zeroing, the parts of radar data may be replaced by zero or null values, or by any baseline or neutral value which does not trigger a detection of a person.

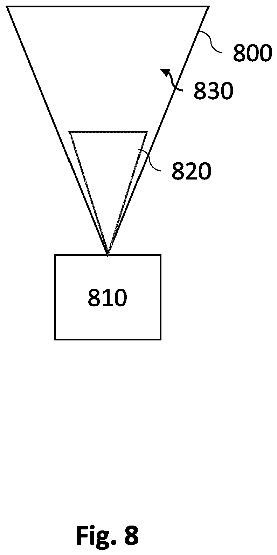

An example of a detection zone and an example of an undesired zone are described with reference to Fig. 8 below.

The processing circuitry 110 is further configured to determine, using a trained neural network 115, a number of persons within the detection zone based on the modified radar data. The trained neural network 115 may be a neural network of any type, e.g., convolutional neural network, a deep neural network, a generative neural network or alike. For example, the trained neural network 115 may output (a prediction of) the number of persons when the modified radar data or data derived thereof is input into the neural network 115.

The trained machine-learning model 115 is to be understood as a data structure and/or set of rules representing a statistical model that can be used to determine the number of persons without using explicit instructions, instead relying on models and inference. The data structure and/or set of rules represents learned knowledge which is acquired based on training performed by a machine-learning algorithm using training data. For example, in order to perform the determination of the number of persons, a transformation of the modified radar data may be used that is inferred from an analysis of the training data.

Training data refers to information or examples used to train the machine learning model 115. It may comprise a collection of input data fed into a training framework for training the machine-learning model 115 and optionally corresponding labels, output or target values (e.g., in case of supervised learning). The training data proposed herein is based on example radar data or preprocessed radar data. The purpose of such training data may be to enable the machine-learning model 115 to learn and generalize patterns, relationships, and rules from the provided examples.

The training of the machine-learning model 115 may be performed using any machine learning or training algorithm. For example, the machine-learning model 115 may be trained using supervised learning, semi-supervised learning, unsupervised learning, reinforcement learning, feature learning, association rules or alike.

For example, the trained machine-learning model 115 may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receive input values (e.g., the modified radar data), hidden nodes that are (only) connected to other nodes, and output nodes that provide output values (e.g., indicating the determined number of persons). Each node may represent an artificial neuron. Each edge may transmit information from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an ANN may comprise adjusting the weights of the nodes and/or edges of the ANN, i.e., to achieve a desired output for a given input. Alternatively, the machine-learning model 115 may be a support vector machine, a random forest model, a gradient boosting model, a Bayesian network or alike.

For example, the processing circuitry 110 may execute or run the trained neural network 115 to determine the number of persons. For example, model parameters, a learned model distribution and/or an architecture of the trained machine-learning model 115 may be loaded into memory coupled to the processing circuitry 110. The processing circuitry 110 may run an inference phase in which the processing circuitry 110 passes the modified radar data (or data derived thereof) through the trained machine-learning model 115 to obtain the number of persons.

The inference phase may involve performing computations using, e.g., model parameters, activations functions, and/or other operations defined by the model architecture. These computations may be performed using linear algebra operations, such as matrix multiplications, convolutions, or element-wise operations, depending on the model architecture. The trained machine-learning model 115 may comprise several layers and, at one or more of the layers, activation functions may be applied to introduce non-linearities and enable the trained machine-learning model 115 to interpret complex patterns in the modified radar data. Common activation functions include a Rectified Linear Unit, sigmoid, or hyperbolic tangent (tanh) functions.

The computations may be performed, e.g., in a forward propagation manner (feed-forward), where data flows through the trained machine-learning model 115 in a predefined direction. For instance, the modified radar data may be provided to an input layer of the trained machine-learning model 115, and data of interim results of the computations may propagate through subsequent downstream layers of the trained machine-learning model 115 until an output layer is reached. The output layer may then output the determined number of persons. These outputs may be interpreted, post-processed, or used for further downstream tasks performed by the processing circuitry 110.

The apparatus 100 may provide an improved person detection with a focus on the detection zone and with increased compute efficiency. Unlike conventional systems, the apparatus 100 may enable a dynamic adaptation of the detection zone to an environment of the apparatus 100. For example, the apparatus 100 may be used for onlooker detection which may be adapted to be less rigorous in crowded environments (trains, cafe, etc.) whereas in less crowded environments, it may be assumed that also persons with a greater distance to the apparatus 100 may be potential onlookers (persons looking on a screen). For example, the radar sensor may be able to detect persons up to a certain range based on its configuration (e.g., 5 meter). In some environments, the detection zone may be limited to 1 meter, such as in a train.

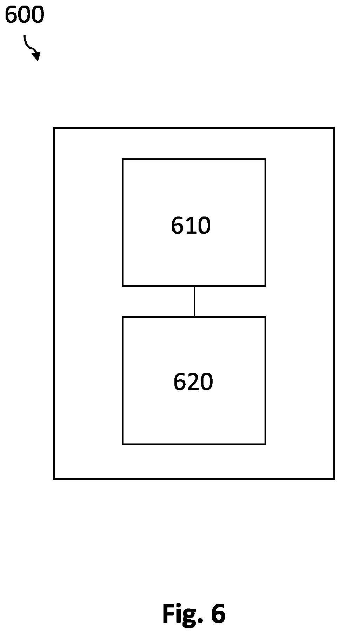

In case of onlooker detection, the apparatus 100 may be coupled to or integrated in the screen or a computer comprising the screen. An example of such a configuration is explained with reference to Fig. 6 below.

The apparatus 100 may therefore provide many advantages including increased accuracy in onlooker identification, adaptability to changing environmental conditions, reduced false alarms, and improved real-time performance. The apparatus 100 may find application in various domains, such as security systems, crowd monitoring, behavioral analysis, and surveillance, where accurate onlooker detection is essential.

In some scenarios, the machine-learning model 115 may need a fixed input size or data dimension, for example, in case of a convolutional neural network. The processing circuitry 110 may therefore be configured to modify the radar data to exhibit a predefined data size, e.g., such that it exhibits compatibility to input requirements of the machine-learning model 115. The processing circuitry 110 may, for instance, pad data areas if the part of the radar data corresponding to the detection zone is smaller than the predefined data size. Or, if the radar data is greater than the predefined data size, the processing circuitry 110 may cut out parts of the radar data which correspond to the undesired zone outside the detection zone. The apparatus 100 may therefore provide reduced data variability and simplified data handling for consistent usage of the machine-learning model 115.

In the following, techniques for preprocessing the radar data for an improved masking of the undesired zone and usage of the machine-learning model 115 are described. The preprocessing may generate an improved input for the machine-learning model 115.

For example, the processing circuitry 110 may be configured to determine a range-angle representation (map) of the radar data and modify the radar data through modifying the range-angle representation. The range-angle representation may be a multi-dimensional representation of the radar data in which the signal portions are organized in terms of their range and angle relative to the radar sensor, e.g., a certain dimension of a data matrix may represent the range and another dimension may represent the angle. The range-angle representation may provide a spatial arrangement of data components. Range-angle representations may facilitate the adaptive masking of the undesired zone if the detection zone is defined by a range and/or an angle. Further, range-angle representations may be a desirable input format for the machine-learning model 115 since (motion) patterns and characteristics of potential targets are directly derivable therefrom.

The range-angle representation may be created using range and channel processing. The processing circuitry 110 may, for example, be configured to determine the range-angle representation through determining a range-Doppler (rang-velocity) representation of the radar data and perform channel processing on the range-Doppler representation. The range-Doppler representation (map) may be a multi-dimensional representation of the radar data that organized data points of the radar data in terms of measured range and velocity (e.g., using binning). In a range-Doppler representation , the range may be arranged along a first axis, while the velocity may be arranged along a second axis. The data points of the radar data may then be assigned to the bins spanned by the first and second axes. Thus, targets may be represented as points or intensity variations on the range-Doppler representation. The range-Doppler representation may further facilitate the analysis of moving targets, including their range, velocity, and direction of motion. The machine-learning model 115 may therefore have a higher accuracy in distinguishing between stationary clutter or interference and moving objects of interest.

The processing circuitry 110 may, for example, be configured to determine the range-Doppler representation through performing a (e.g., fast) Fourier transform, any other suitable transform (z-transform etc.) or correlations on the radar data.

The processing circuitry 110 may, in some examples, be configured to determine the range-angle representation using coherent integration. Coherent integration may involve combining multiple coherent radar signals to enhance the signal-to-noise ratio (SNR) and increase the detection sensitivity. Coherence may refer to maintaining a constant phase relationship between several radar signals (e.g., chirps or pulses) and accumulating received radar echoes over multiple coherent pulses. Instead of processing each radar signal individually, the received signals from multiple pulses may be combined or added together coherently. The coherent summation may take into account the phase and amplitude information of the received signals to enhance the desired target signals while reducing the effect of random noise or interference. Coherent integration may increase the SNR by aligning and reinforcing the coherent echoes from the target while averaging out random noise or interference. As more coherent pulses are integrated, the desired target signals accumulate and become stronger, while the random noise may tend to cancel out due to its random phase relationship. By integrating signals over a longer time period, coherent integration may allow for the detection of weaker targets that may not be distinguishable in a single echo.

For detecting persons micro and macro information in the radar data may be analyzed. For example, the processing circuitry 110 may be configured to determine macro motion data indicating a macro motion in a field of view of the radar sensor based on the radar data and micro motion data indicating a micro motion in the field of view of the radar sensor based on the radar data. By taking micro motion data into consideration, which captures fine-grained kinematics and subtle changes, the machine-learning model 115 may be enabled to gain granular insight into the dynamics of the object and search for characteristic patterns of persons. Micro motion data may provide detailed information about small-scale movements, variations, and interactions that may not be apparent in macro motion analysis alone. The micro motion analysis may also enable higher precision in capturing and quantifying movements. It may allow for the detection and measurement of breathing motions, heartbeat motions or subtle gestures.

Macro motion data may focus on the overall movement or global behavior of a target. By complementing macro motion analysis with micro motion analysis, the machine-learning model 115 may gain a deeper understanding of the type of target. Micro motion data may help to uncover the underlying details, interactions, and mechanisms that contribute to the observed macro-level behavior. This holistic understanding may be valuable for the detection and counting of persons performed by the machine-learning model 115.

The processing circuitry 110 may be further configured to determine a respective range-angle representation for the macro motion data and the micro motion data and modify the radar data through modifying the respective range-angle representation for the macro motion data and the micro motion data. That is, there may be two processing pipelines for separately processing the micro motion data and the macro motion data. The separate processing may provide an improved resource utilization: Micro data analysis may require more computational resources due to its detailed nature, while macro data analysis may be performed in a resource-saving manner. By leveraging the appropriate level of processing for each data type, computational efficiency and resource utilization may be optimized. Separate processing of micro and macro motion data may also allow for the application of specialized algorithms, models, or methodologies that are tailored to each data type.

For example, the processing circuitry 110 may be configured to determine the range-angle representation for the macro motion data using digital beam forming. Digital beam forming may be a specific type of channel processing, i.e., of processing and combining different antenna channels of the radar sensor (e.g., having an antenna array). Digital beam forming may involve manipulating a phase and an amplitude of the respective digitalized received radar signal from each antenna element. Digital beam forming may further involve applying Fourier transforms, algorithms such as delay-and-sum or adaptive beamforming or alike. Digital beam forming may simplify the processing of the macro motion data while increasing the beam forming precision and control.

In case of micro motion data, the processing circuitry 110 may, for example, be configured to determine the range-angle representation for the micro motion data using a Capon method. The Capon method, i.e., the Capon's minimum variance method or minimum variance distortionless response (MVDR) beamforming, may enable a more precise angle determination for micro motion data. The Capon method may derive the range-angle representation from the radar data and based on an array of antennas of the radar sensor with a known geometry or spatial arrangement. The radar data may be used to estimate a sample covariance matrix. This matrix may represent the statistical relationship between the signal portions received by different antenna elements. The inverse of the estimated covariance matrix may be determined and used in subsequent steps to estimate weights for different direction of angles corresponding to different antennas of the antenna array. The Capon method may further estimate the spatial spectrum of the received radar signals, e.g., representing the power distribution as a function of the direction of arrival of the signal portions. The weights for the antenna array may be determined by increasing the output power of the signal while minimizing the noise power. The Capon method may be particularly useful for high resolution in angle estimation for micro motion data as well as for adaptive nulling of the undesired zone.

For analyzing motion in the radar data, a moving target indicator may be used. For example, the processing circuitry 110 may be configured to filter the radar data using a moving target indicator and modify the radar data through modifying the filtered radar data. For example, the processing circuitry 110 may sample two or more (e.g., successive) echoes being represented in the radar data. A sample taken with a first echo may be rotated by 180 degrees and added to a next sample. If an object is moving in the location corresponding to both samples, then the resulting signal may survive this process due to constructive interference. By using a moving target indicator, the apparatus 100 may effectively distinguish moving targets from clutter, enabling improved detection and tracking by the machine-learning model 115.

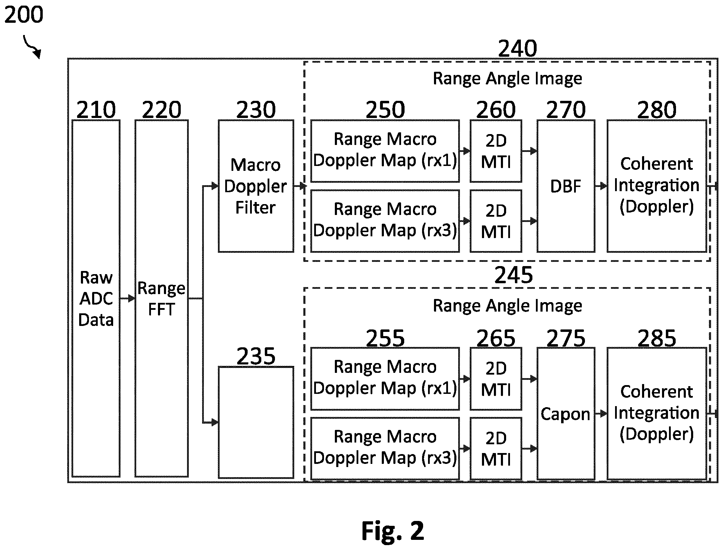

**Fig. 2** illustrates an example of a preprocessing chain 200. The preprocessing chain 200 may be executed by an apparatus as described herein, such as apparatus 100 (in particular by processing circuitry 110). The preprocessing chain 200 comprises obtaining 210 radar data indicating a received radar signal of a radar sensor. In the example of Fig. 2, the radar data is raw ADC (analog-to-digital converter) data, i.e., data after being sampled by an ADC.

The preprocessing chain 200 further comprises performing 220 a (fast) Fourier transform on the radar data, yielding a range representation (range profiles) of the radar data. Then, a macro-Doppler filter 230 and a micro-Doppler filter are separately applied to the range representation. In this way, macro motion data indicating a macro motion in a field of view of the radar sensor and micro motion data indicating a micro motion in the field of view of the radar sensor are determined.

A respective range-angle representation for the macro motion data and the micro motion data is then determined 240, 245 in the following manner: The preprocessing chain 200 comprises determining 250, 255 a respective range-Doppler representation of the macro motion data and the micro motion data, respectively. For each of a plurality of channels of the radar data, a respective range-Doppler representation is determined. Then, in both processing pipelines 240, 245 the range-Doppler representations are filtered using 260, 265 a moving target indicator. The range-angle representation for the macro motion data is determined using digital beam forming 270, whereas the range-angle representation for the micro motion data is determined using a Capon method 275. Then, in both cases, coherent integration 280, 285 is applied to the channel-processed data.

The range-angle representations may then be modified for masking an undesired zone outside the detection zone and the modified range-angle representations may be input into a trained machine-learning model which outputs a prediction of number of persons within a detection zone.

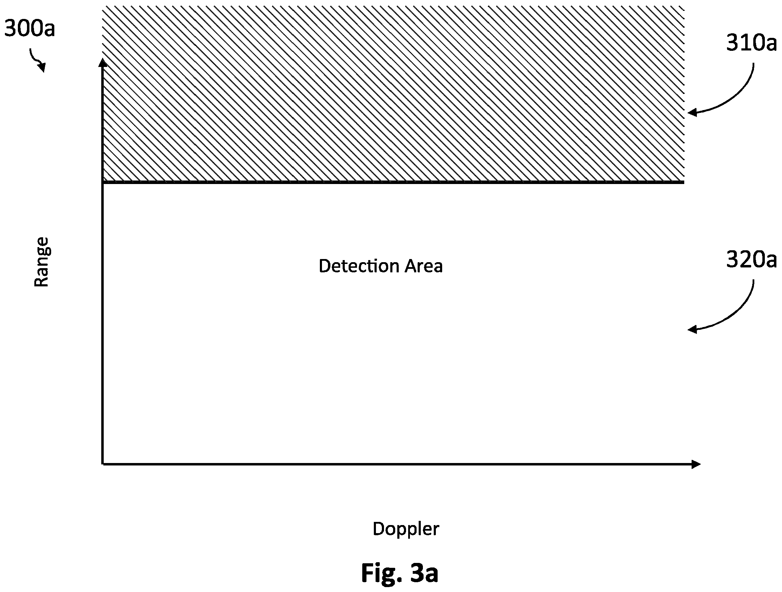

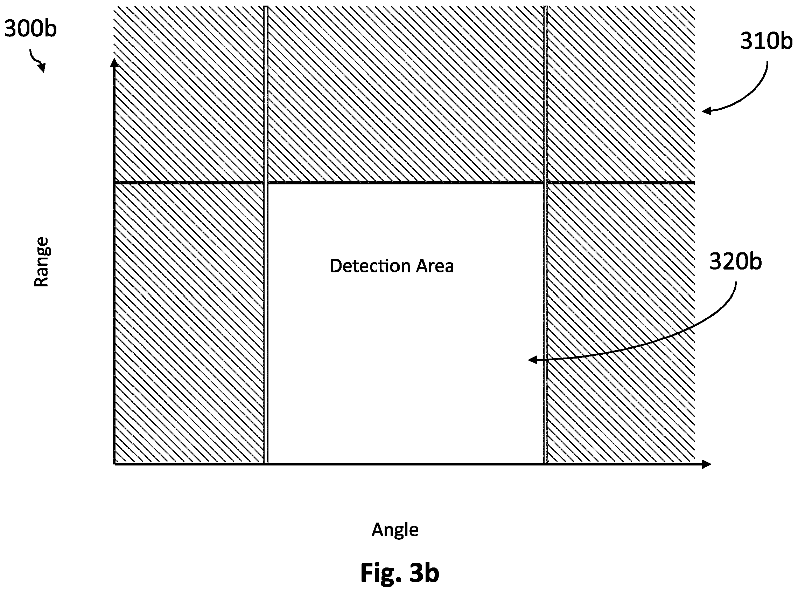

**Fig. 3a** and **Fig. 3b** illustrate an example of a range-Doppler representation 300a of radar data and an example of a range-angle representation 300b of radar data, respectively.

The range-Doppler representation 300a and the range-angle representation 300b are illustrated as two-dimensional data structures for illustrative purposes. The range-Doppler representation 300a is spanned by a range dimension over a Doppler dimension, whereas the range-angle representation 300b is spanned by a range dimension over an angle dimension.

Both, the range-Doppler representation 300a and the range-angle representation 300b are modified for masking the undesired zone 310a, 310b in the radar data, e.g., by cutting out or zeroing a certain range or a certain range and angle, respectively. For instance, a user may have defined (by a user input) the detection range and/or angle, thereby defining a detection zone 320a and 320b of the range-Doppler representation 300a and the range-angle representation 300b, respectively.

Exclusively the detection zone 320a, 320b may be "visible" for the detection of targets. The masked range-Doppler representation 300a and range-angle representation 300b may be input to a trained machine-learning model, as described above.

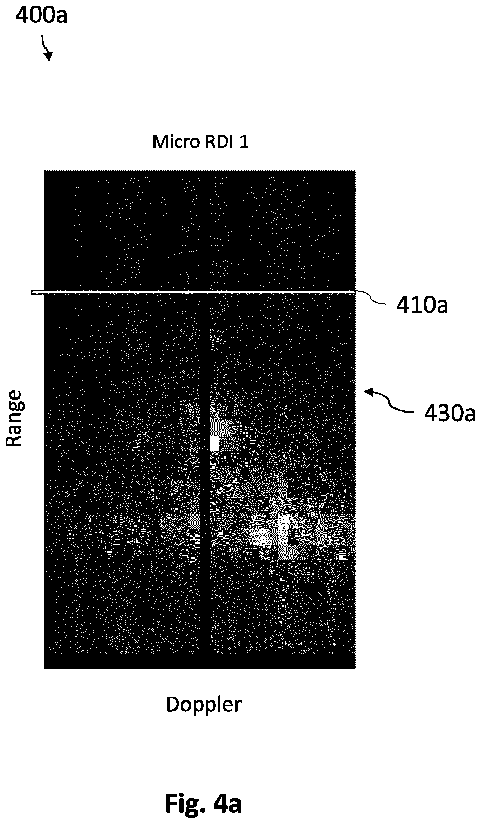

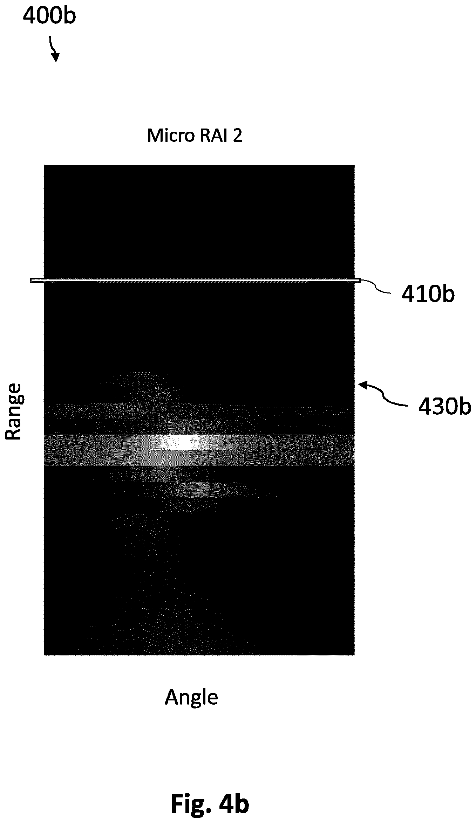

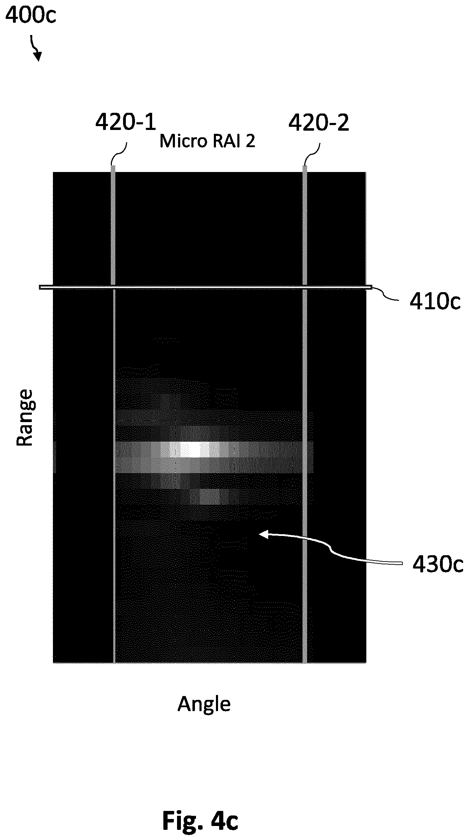

**Figs. 4a to 4c** illustrate examples of micro motion data 400a, 400b, 400c, respectively. The micro motion data 400a is illustrated as a range-Doppler representation of radar data in the example of Fig. 4a. The micro motion data 400b and 400c is illustrated as a range-angle representation of radar data in Fig. 4b and Fig. 4c.

The micro motion data 400a, 400b, 400c is modified for masking an undesired zone in the radar data. A respective desired range 410a, 410b and 410c is defined up to which targets are to be detected. In the example of Fig. 4c, a desired angle interval from a first angle 420-1 to a second angle 420-2 is defined in which targets are to be detected.

The undesired zone is cut from the detection of targets. The remaining part of the micro motion data 400a, 400b, 400c is a detection zone 430a, 430b, 430c, respectively. The micro motion data 400a, 400b, 400c may be input to a trained machine-learning model, as described above.

**Fig. 5** illustrates an example of a radar system 500. The radar system 500 comprises an apparatus 510 as described herein, such as the apparatus 100. The radar system 500 further comprises the radar sensor 520. The radar sensor 520 is configured to generate the radar data based on the received radar signal. The radar sensor 520 may, for instance, be an FMCW (Frequency-Modulated Continuous Wave) radar sensor.

Although the apparatus 510 and the radar sensor 520 are depicted as separate blocks in Fig. 5, in other examples, the apparatus 510 may in part or in entirety be included in the radar sensor 520, which thus correspondingly includes all or part of the processing circuitry (e.g., processing circuitry 110) of the apparatus 510.

In case the apparatus 510 is only partially included in the radar sensor 520, the radar system 500 may include distributed processing circuitry carrying out respective parts of the processing steps, e.g., in the form of first processing (sub-) circuitry included in the radar sensor 520, and second processing (sub-) circuitry external to the sensor and in communication with the first processing circuitry through interface circuitry (e.g., interface circuitry 120), for instance, for exchange of data between the first and the second processing circuitry.

In case the apparatus 510 is integrated in the radar sensor 520, the processing circuitry and the radar sensor 520 may be jointly integrated in a single semiconductor chip, or in more than one semi-conductor chip.

In case the apparatus 510 is not included in the radar sensor 520, the processing circuitry may take the form of circuitry external to the radar sensor 520 and may be communicatively coupled therewith through interface circuitry.

More details and aspects of the radar system 500 are explained in connection with the proposed technique or one or more examples described above, e.g., with reference to Fig. 1. The radar system 500 may comprise one or more additional optional features corresponding to one or more aspects of the proposed technique, or one or more examples described above.

The radar system 500 may provide an improved person detection with a focus on the detection zone and with increased compute efficiency. Unlike conventional systems, the radar system 500 may enable a dynamic adaptation of the detection zone to an environment of the apparatus 510.

**Fig. 6** illustrates an example of an electronic device 600. The electronic device 600 may be a consumer device, e.g., a laptop, a smartphone, a display or alike. The electronic device 600 comprises a radar system 610 as described above, e.g., the radar system 500. The electronic device 600 further comprises control circuitry 620 configured to control the electronic device 600 based on the determined number of persons.

For example, the electronic device 600 may have an onlooker detection functionality. In that case, the control circuitry 620 may alert a user of the electronic device 600 or take action if the radar system 610 detects presence of potentially unauthorized individuals or onlookers. Such a mechanism of generating an alert and/or taking action can be implemented regardless of whether the electronic device 600 exhibits such an onlooker detection function. For example, the control circuitry 620 may trigger an alert, such as sounding an alarm, sending a notification to the user or alike. Optionally or alternatively, the control circuitry 620 may activate a security measure to mitigate the risk of onlookers, e.g., darken a display connected to the electronic device 600, hide confidential data on the display or alike.

More details and aspects of the electronic device 600 are explained in connection with the proposed technique or one or more examples described above, e.g., with reference to Fig. 1. The electronic device 600 may comprise one or more additional optional features corresponding to one or more aspects of the proposed technique, or one or more examples described above.

The electronic device 600 may provide an improved person detection with a focus on the detection zone and with increased compute efficiency. Unlike conventional systems, the electronic device 600 may enable a dynamic adaptation of the detection zone to an environment of the device 600.

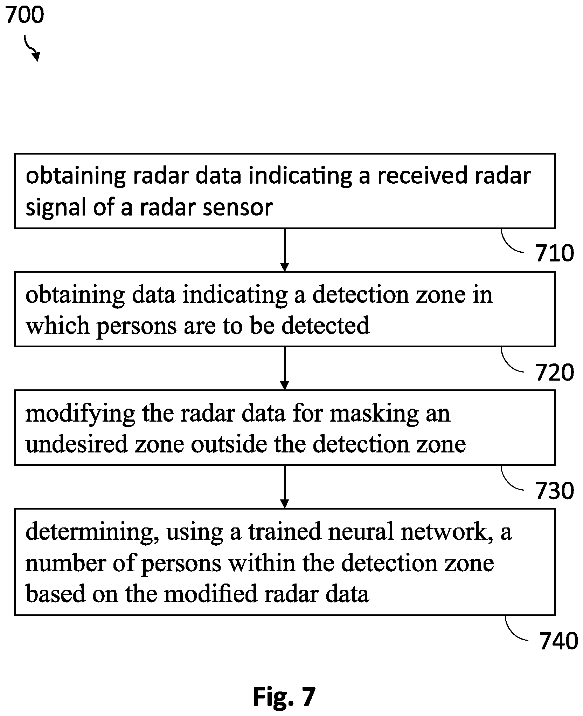

**Fig. 7** illustrates an example of a method 700. The method 700 may be executed by an apparatus as described herein, such as apparatus 100.

The method 700 comprises obtaining 710 radar data indicating a received radar signal of a radar sensor, obtaining 720 data indicating a detection zone in which persons are to be detected and modifying 730 the radar data for masking an undesired zone outside the detection zone. The method 700 further comprises determining 740, using a trained neural network, a number of persons within the detection zone based on the modified radar data.

More details and aspects of the method 700 are explained in connection with the proposed technique or one or more examples described above, e.g., with reference to Fig. 1. The method 700 may comprise one or more additional optional features corresponding to one or more aspects of the proposed technique, or one or more examples described above.

The method 700 may provide an improved person detection with a focus on the detection zone and with increased compute efficiency. Unlike conventional systems, the method 700 may enable a dynamic adaptation of the detection zone to.

**Fig. 8** illustrates an example of a field of view 800 of a radar sensor 810. The field of view 800 refers to a maximum angular interval and maximum distance (range) within which the radar sensor 810 can detect and measure targets with a predefined accuracy. It represents the total span of angles and distances over which the radar sensor 810 can effectively operate and provide accurate information. These angles and distances are measured from a phase center of an antenna of the radar sensor 810, for instance. The field of view 800 may thus correspond to the angular and distance coverage of the radar sensor 810.

An apparatus as described herein (e.g., apparatus 100) may obtain data indicating a detection zone 820 within the field of view 800 of the radar sensor 810 in which persons are to be detected. The detection zone 820 is a subpart of the field of view 800. In the example of Fig. 8, the detection zone 820 is narrowed down to smaller distances and angles compared to the field of view 800. The part of the field of view 800 which is excluded from the detection zone 820 is referred to as an undesired zone 830.

In the following, some examples of the proposed concept are presented:
An example (e.g., example 1) relates to an apparatus, comprising processing circuitry configured to obtain radar data indicating a received radar signal of a radar sensor, obtain data indicating a detection zone in which persons are to be detected, modify the radar data for masking an undesired zone outside the detection zone, and determine, using a trained neural network, a number of persons within the detection zone based on the modified radar data.

Another example (e.g., example 2) relates to a previous example (e.g., example 1) or to any other example, further comprising that the data indicates at least one of a range interval and an angle interval in which persons are to be detected.

Another example (e.g., example 3) relates to a previous example (e.g., one of the examples 1 or 2) or to any other example, further comprising that the processing circuitry is configured to modify the radar data to exhibit a predefined data size.

Another example (e.g., example 4) relates to a previous example (e.g., one of the examples 1 to 3) or to any other example, further comprising that the processing circuitry is configured to modify the radar data through at least one of attenuating, removing and zeroing a part of the radar data corresponding to the undesired zone.

Another example (e.g., example 5) relates to a previous example (e.g., one of the examples 1 to 4) or to any other example, further comprising that the processing circuitry is configured to obtain the data through receiving a user input of a user of the apparatus.

Another example (e.g., example 6) relates to a previous example (e.g., one of the examples 1 to 5) or to any other example, further comprising that the processing circuitry is configured to determine a range-angle representation of the radar data and modify the radar data through modifying the range-angle representation.

Another example (e.g., example 7) relates to a previous example (e.g., one of the examples 1 to 6) or to any other example, further comprising that the processing circuitry is configured to determine macro motion data indicating a macro motion in a field of view of the radar sensor based on the radar data and micro motion data indicating a micro motion in the field of view of the radar sensor based on the radar data, determine a respective range-angle representation for the macro motion data and the micro motion data, and modify the radar data through modifying the respective range-angle representation for the macro motion data and the micro motion data.

Another example (e.g., example 8) relates to a previous example (e.g., example 7) or to any other example, further comprising that the processing circuitry is configured to determine the range-angle representation for the macro motion data using digital beam forming.

Another example (e.g., example 9) relates to a previous example (e.g., one of the examples 7 or 8) or to any other example, further comprising that the processing circuitry is configured to determine the range-angle representation for the micro motion data using a Capon method.

Another example (e.g., example 10) relates to a previous example (e.g., one of the examples 6 to 9) or to any other example, further comprising that the processing circuitry is configured to determine the range-angle representation through determining a range-Doppler representation of the radar data and perform channel processing on the range-Doppler representation.

Another example (e.g., example 11) relates to a previous example (e.g., example 10) or to any other example, further comprising that the processing circuitry is configured to determine the range-Doppler representation through performing a Fourier transform on the radar data.

Another example (e.g., example 12) relates to a previous example (e.g., one of the examples 6 to 11) or to any other example, further comprising that the processing circuitry is configured to determine the range-angle representation using coherent integration.

Another example (e.g., example 13) relates to a previous example (e.g., one of the examples 1 to 12) or to any other example, further comprising that the processing circuitry is configured to filter the radar data using a moving target indicator and modify the radar data through modifying the filtered radar data.

An example (e.g., example 14) relates to a radar system, comprising an apparatus according to any one of the previous examples, and the radar sensor, wherein the radar sensor is configured to generate the radar data based on the received radar signal.

An example (e.g., example 15) relates to an electronic device, comprising a radar system according to example 14, and control circuitry configured to control the electronic device based on the determined number of persons.

An example (e.g., example 16) relates to a method, comprising obtaining radar data indicating a received radar signal of a radar sensor, obtaining data indicating a detection zone in which persons are to be detected, modifying the radar data for masking an undesired zone outside the detection zone, and determining, using a trained neural network, a number of persons within the detection zone based on the modified radar data.

Another example (e.g., example 17) relates to a non-transitory machine-readable medium having stored thereon a program having a program code for performing the method of example 16, when the program is executed on a processor or a programmable hardware.

Another example (e.g., example 18) relates to a program having a program code for performing the method of example 16, when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus, comprising processing circuitry (110) configured to:
obtain radar data indicating a received radar signal of a radar sensor;
obtain data indicating a detection zone (820) in which persons are to be detected;
modify the radar data for masking an undesired zone (830) outside the detection zone (820); and
determine, using a trained neural network (115), a number of persons within the detection zone (820) based on the modified radar data.

2. The apparatus (100) of claim 1, wherein the data indicates at least one of a range interval and an angle interval in which persons are to be detected.

3. The apparatus (100) of any one of the previous claims, wherein the processing circuitry (110) is configured to modify the radar data to exhibit a predefined data size.

4. The apparatus (100) of any one of the previous claims, wherein the processing circuitry (110) is configured to modify the radar data through at least one of attenuating, removing and zeroing a part of the radar data corresponding to the undesired zone (830).

5. The apparatus (100) of any one of the previous claims, wherein the processing circuitry (110) is configured to obtain the data through receiving a user input of a user of the apparatus (100).

6. The apparatus (100) of any one of the previous claims, wherein the processing circuitry (110) is configured to determine a range-angle representation of the radar data and modify the radar data through modifying the range-angle representation.

7. The apparatus (100) of any one of the previous claims, wherein the processing circuitry (110) is configured to:
determine macro motion data indicating a macro motion in a field of view of the radar sensor based on the radar data and micro motion data indicating a micro motion in the field of view of the radar sensor based on the radar data;
determine a respective range-angle representation for the macro motion data and the micro motion data; and
modify the radar data through modifying the respective range-angle representation for the macro motion data and the micro motion data.

8. The apparatus (100) of any one of claims 6 or 7, wherein the processing circuitry (110) is configured to determine the range-angle representation through determining a range-Doppler representation of the radar data and perform channel processing on the range-Doppler representation.

9. The apparatus (100) of any one of claims 6 to 8, wherein the processing circuitry (110) is configured to determine the range-angle representation using coherent integration.

10. The apparatus (100) of any one of the previous claims, wherein the processing circuitry (110) is configured to filter the radar data using a moving target indicator and modify the radar data through modifying the filtered radar data.

11. A radar system (500), comprising:
an apparatus (510) according to any one of the previous claims; and
the radar sensor (520), wherein the radar sensor is configured to generate the radar data based on the received radar signal.

12. An electronic device (600), comprising:
a radar system (610) according to claim 11; and
control circuitry (620) configured to control the electronic device (600) based on the determined number of persons.

13. A method (700), comprising:
obtaining (710) radar data indicating a received radar signal of a radar sensor;
obtaining (720) data indicating a detection zone in which persons are to be detected;
modifying (730) the radar data for masking an undesired zone outside the detection zone; and
determining (740), using a trained neural network, a number of persons within the detection zone based on the modified radar data.

14. A non-transitory machine-readable medium having stored thereon a program having a program code for performing the method of claim 13, when the program is executed on a processor or a programmable hardware.

15. A program having a program code for performing the method of claim 13, when the program is executed on a processor or a programmable hardware.
